# EUROPEAN PATENT SPECIFICATION

(11) **EP 3 189 106 B1**
(45) Date of publication and mention of the grant of the patent: **15.04.2020**
(21) Application number: 15837613.7
(22) Date of filing: 21.08.2015
(51) Int. Cl.: C09D 5/03, C09D 167/02

(54) **POLYESTER POLYOLS AND USE THEREOF IN POWDER COATINGS**
POLYESTERPOLYOLE UND VERWENDUNG DAVON IN PULVERBESCHICHTUNGEN
POLYOLS DE POLYESTER ET LEUR UTILISATION DANS DES REVÊTEMENTS EN POUDRE

(30) Priority: 02.09.2014 US 201462044801 P
(43) Date of publication of application: 12.07.2017
(73) Proprietor: Elevance Renewable Sciences, Inc., Woodridge, IL 60517 (US)
(72) Inventor: MODY, Kamlesh, Woodridge, Illinois 60517 (US)
(74) Representative: Murgitroyd & Company
(86) International application number: PCT/US2015/046359
(87) International publication number: WO 2016/036525

(56) References cited:
- EP-A1- 1 067 159
- EP-A1- 1 553 148
- WO-A1-02/50201
- JP-A- H07 316 471
- KR-A- 20110 094 945
- US-A1- 2004 024 114
- US-A1- 2004 087 736
- US-A1- 2006 025 555
- US-A1- 2010 056 702
- US-A1- 2010 126 664
- US-A1- 2012 160 413

## Description

### CROSS-REFERENCE TO RELATED APPLICATIONS

The present application claims the benefit of priority of United States Provisional Application No. 62/044,801, filed September 2, 2014.

### TECHNICAL FIELD

Powder coating compositions containing polyester polyols are generally disclosed, including methods of making and using them. In some embodiments, powder coating compositions are disclosed that include a polyester polyol and a cross-linking agent.

### BACKGROUND

Polyester polyols can be used in a variety of different applications. Typical such compounds have melting points that may make them undesirable for use in certain applications. For example, typically available polyester polyols may not be suitable for use in powder coatings because of their low melting points.

EP1067159 A1, EP1553148 A1 and US2004/087736 A1 disclose powder coatings comprising a polyester that can be made from 1,12-dodecanedioic acid.

It is desirable therefore to develop polyester polyols that have properties that have higher melting points and that would therefore make them more suitable for use in powder coating applications.

### SUMMARY

In a first aspect, the disclosure provides polyester polyols that include, among other features, one or more constitutional units according to formula (I): 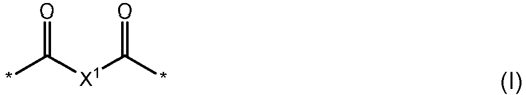
wherein X¹ is -(CH₂)₁₆ which is optionally substituted one or more times by substituents selected independently from R¹; and
R¹ is a halogen atom, -OH, -NH₂, C₁₋₆ alkyl, C₁₋₆ heteroalkyl, C₂₋₆ alkenyl, C₂₋₆ heteroalkenyl, C₃₋₁₀ cycloalkyl, or C₂₋₁₀ heterocycloalkyl.

Polyester polyols are disclosed which are formed from a reaction mixture comprising: a first short-chain diol; and a diacid or an ester thereof. In some embodiments, the diacid or ester thereof, is a C₁₁₋₂₄ aliphatic straight-chain diacid, or an ester thereof. In some other embodiments, the diacid or ester thereof, is a C₁₄₋₂₄ aliphatic straight-chain diacid, or an ester thereof.

In a third aspect, the disclosure provides a powder coating composition that comprises a polyester polyol of the first aspect or the second aspect, and a cross-linking agent.

In a fourth aspect, the disclosure provides a method of lowering the melting point (T_{g}) of a polyester polyol, comprising: providing a polyester polyol, and contacting the polyester polyol with a cross-linking agent, e.g., to lower the T_{g} of the polyester polyol.

Further aspects and embodiments are provided in the foregoing drawings, detailed description, and claims.

### BRIEF DESCRIPTION OF THE DRAWINGS

The following drawings are provided for purposes of illustrating various embodiments of the compositions and methods disclosed herein. The drawings are provided for illustrative purposes only, and are not intended to describe any preferred compositions or preferred methods, or to serve as a source of any limitations on the scope of the claimed inventions.

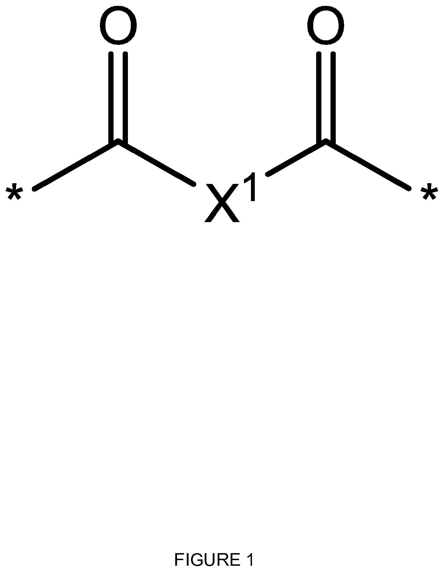

Figure 1 shows an example of at least one constitutional unit included in certain embodiments of polyester polyols disclosed herein, wherein X¹ is C₈₋₃₆ alkylene, C₈₋₃₆ alkenylene, C₈₋₃₆ heteroalkylene, or C₈₋₃₆ heteroalkenylene, each of which is optionally substituted.

### DETAILED DESCRIPTION

The following description recites various aspects and embodiments of the inventions disclosed herein. No particular embodiment is intended to define the scope of the invention. Rather, the embodiments provide non-limiting examples of various compositions, and methods that are included within the scope of the claimed inventions. The description is to be read from the perspective of one of ordinary skill in the art. Therefore, information that is well known to the ordinarily skilled artisan is not necessarily included.

### Definitions

The following terms and phrases have the meanings indicated below, unless otherwise provided herein. This disclosure may employ other terms and phrases not expressly defined herein. Such other terms and phrases shall have the meanings that they would possess within the context of this disclosure to those of ordinary skill in the art. In some instances, a term or phrase may be defined in the singular or plural. In such instances, it is understood that any term in the singular may include its plural counterpart and vice versa, unless expressly indicated to the contrary.

As used herein, the singular forms "a," "an," and "the" include plural referents unless the context clearly dictates otherwise. For example, reference to "a substituent" encompasses a single substituent as well as two or more substituents, and the like.

As used herein, "for example," "for instance," "such as," or "including" are meant to introduce examples that further clarify more general subject matter. Unless otherwise expressly indicated, such examples are provided only as an aid for understanding embodiments illustrated in the present disclosure, and are not meant to be limiting in any fashion. Nor do these phrases indicate any kind of preference for the disclosed embodiment.

As used herein, "polymer" refers to a substance having a chemical structure that includes the multiple repetition of constitutional units formed from substances of comparatively low relative molecular mass relative to the molecular mass of the polymer. The term "polymer" includes soluble and/or fusible molecules having chains of repeat units, and also includes insoluble and infusible networks.

As used herein, "monomer" refers to a substance that can undergo a polymerization reaction to contribute constitutional units to the chemical structure of a polymer.

As used herein, "prepolymer" refers to a polymer that can undergo further reaction to contribute constitutional units to the chemical structure of a different polymer.

As used herein, "polymer sequence" refers generically to any species formed from a reaction of monomers. In some instances, a "polymer sequence" can refer to an entire polymer molecule or copolymer molecule, such as, for example, with a homopolymer or an alternating copolymer. In other instances, a "polymer sequence" can refer to a portion of a polymer molecule, such as a block within a block copolymer.

As used herein, "copolymer" refers to a polymer having constitutional units formed from more than one species of monomer.

As used herein, "polyester" refers to a polymer comprising two or more ester linkages. Other types of linkages can be included, however. In some embodiments, at least 80%, or at least 90%, or at least 95% of the linkages in the polyester are ester linkages. The term can refer to an entire polymer molecule, or can also refer to a particular polymer sequence, such as a block within a block copolymer.

As used herein, "reaction" and "chemical reaction" refer to the conversion of a substance into a product, irrespective of reagents or mechanisms involved.

As used herein, "reaction product" refers to a substance produced from a chemical reaction of one or more reactant substances.

The term "group" refers to a linked collection of atoms or a single atom within a molecular entity, where a molecular entity is any constitutionally or isotopically distinct atom, molecule, ion, ion pair, radical, radical ion, complex, conformer etc., identifiable as a separately distinguishable entity. The description of a group as being "formed by" a particular chemical transformation does not imply that this chemical transformation is involved in making the molecular entity that includes the group.

The term "functional group" refers to a group that includes one or a plurality of atoms other than hydrogen and sp³ carbon atoms. Examples of functional groups include but are not limited to hydroxyl, protected hydroxyl, ether, ketone, ester, carboxylic acid, cyano, amido, isocyanate, urethane, urea, protected amino, thiol, sulfone, sulfoxide, phosphine, phosphite, phosphate, halide, and the like.

As used herein, "mix" or "mixed" or "mixture" refers broadly to any combining of two or more compositions. The two or more compositions need not have the same physical state; thus, solids can be "mixed" with liquids, e.g., to form a slurry, suspension, or solution. Further, these terms do not require any degree of homogeneity or uniformity of composition. This, such "mixtures" can be homogeneous or heterogeneous, or can be uniform or non-uniform. Further, the terms do not require the use of any particular equipment to carry out the mixing, such as an industrial mixer.

As used herein, "metathesis catalyst" includes any catalyst or catalyst system that catalyzes an olefin metathesis reaction.

As used herein, "natural oil," "natural feedstock," or "natural oil feedstock" refer to oils derived from plants or animal sources. These terms include natural oil derivatives, unless otherwise indicated. The terms also include modified plant or animal sources (e.g., genetically modified plant or animal sources), unless indicated otherwise. Examples of natural oils include, but are not limited to, vegetable oils, algae oils, fish oils, animal fats, tall oils, derivatives of these oils, combinations of any of these oils, and the like. Representative non-limiting examples of vegetable oils include rapeseed oil (canola oil), coconut oil, corn oil, cottonseed oil, olive oil, palm oil, peanut oil, safflower oil, sesame oil, soybean oil, sunflower oil, linseed oil, palm kernel oil, tung oil, jatropha oil, mustard seed oil, pennycress oil, camelina oil, hempseed oil, and castor oil. Representative non-limiting examples of animal fats include lard, tallow, poultry fat, yellow grease, and fish oil. Tall oils are by-products of wood pulp manufacture. In some embodiments, the natural oil or natural oil feedstock comprises one or more unsaturated glycerides (e.g., unsaturated triglycerides). In some such embodiments, the natural oil feedstock comprises at least 50% by weight, or at least 60% by weight, or at least 70% by weight, or at least 80% by weight, or at least 90% by weight, or at least 95% by weight, or at least 97% by weight, or at least 99% by weight of one or more unsaturated triglycerides, based on the total weight of the natural oil feedstock.

As used herein, "natural oil derivatives" refers to the compounds or mixtures of compounds derived from a natural oil using any one or combination of methods known in the art. Such methods include but are not limited to saponification, fat splitting, transesterification, esterification, hydrogenation (partial, selective, or full), isomerization, oxidation, and reduction. Representative non-limiting examples of natural oil derivatives include gums, phospholipids, soapstock, acidulated soapstock, distillate or distillate sludge, fatty acids and fatty acid alkyl ester (e.g. non-limiting examples such as 2-ethylhexyl ester), hydroxy substituted variations thereof of the natural oil. For example, the natural oil derivative may be a fatty acid methyl ester ("FAME") derived from the glyceride of the natural oil. In some embodiments, a feedstock includes canola or soybean oil, as a non-limiting example, refined, bleached, and deodorized soybean oil (i.e., RBD soybean oil). Soybean oil typically comprises about 95% weight or greater (e.g., 99% weight or greater) triglycerides of fatty acids. Major fatty acids in the polyol esters of soybean oil include saturated fatty acids, as a non-limiting example, palmitic acid (hexadecanoic acid) and stearic acid (octadecanoic acid), and unsaturated fatty acids, as a non-limiting example, oleic acid (9-octadecenoic acid), linoleic acid (9, 12-octadecadienoic acid), and linolenic acid (9,12,15-octadecatrienoic acid).

As used herein, "metathesize" or "metathesizing" refer to the reacting of a feedstock in the presence of a metathesis catalyst to form a "metathesized product" comprising new olefinic compounds, i.e., "metathesized" compounds. Metathesizing is not limited to any particular type of olefin metathesis, and may refer to cross-metathesis (i.e., co-metathesis), self-metathesis, ring-opening metathesis, ring-opening metathesis polymerizations ("ROMP"), ring-closing metathesis ("RCM"), and acyclic diene metathesis ("ADMET"). In some embodiments, metathesizing refers to reacting two triglycerides present in a natural feedstock (self-metathesis) in the presence of a metathesis catalyst, wherein each triglyceride has an unsaturated carbon-carbon double bond, thereby forming a new mixture of olefins and esters which may include a triglyceride dimer. Such triglyceride dimers may have more than one olefinic bond, thus higher oligomers also may form. Additionally, in some other embodiments, metathesizing may refer to reacting an olefin, such as ethylene, and a triglyceride in a natural feedstock having at least one unsaturated carbon-carbon double bond, thereby forming new olefinic molecules as well as new ester molecules (cross-metathesis).

The term "metathesized natural oil" refers to the metathesis reaction product of a natural oil in the presence of a metathesis catalyst, where the metathesis product includes a new olefinic compound. A metathesized natural oil may include a reaction product of two triglycerides in a natural feedstock (self-metathesis) in the presence of a metathesis catalyst, where each triglyceride has an unsaturated carbon-carbon double bond, and where the reaction product includes a "natural oil oligomer" having a new mixture of olefins and esters that may include one or more of metathesis monomers, metathesis dimers, metathesis trimers, metathesis tetramers, metathesis pentamers, and higher order metathesis oligomers (e.g., metathesis hexamers). A metathesized natural oil may include a reaction product of a natural oil that includes more than one source of natural oil (e.g., a mixture of soybean oil and palm oil). A metathesized natural oil may include a reaction product of a natural oil that includes a mixture of natural oils and natural oil derivatives.

As used herein, "ester" or "esters" refer to compounds having the general formula: R-COO-R', wherein R and R' denote any organic group (such as alkyl, aryl, or silyl groups) including those bearing heteroatom-containing substituent groups. In certain embodiments, R and R' denote alkyl, alkenyl, aryl, or alcohol groups. In certain embodiments, the term "esters" may refer to a group of compounds with the general formula described above, wherein the compounds have different carbon lengths.

As used herein, "alcohol" or "alcohols" refer to compounds having the general formula: R-OH, wherein R denotes any organic moiety (such as alkyl, aryl, or silyl groups), including those bearing heteroatom-containing substituent groups. In certain embodiments, R denotes alkyl, alkenyl, aryl, or alcohol groups. In certain embodiments, the term "alcohol" or "alcohols" may refer to a group of compounds with the general formula described above, wherein the compounds have different carbon lengths. The term "hydroxyl" refers to a -OH moiety. In some cases, an alcohol can have more than two or more hydroxyl groups. As used herein, "diol" and "polyol" refer to alcohols having two or more hydroxyl groups. A "polyester polyol" is a polyester polymer or prepolymer having two or more hydroxyl groups.

As used herein, "amine" or "amines" refer to compounds having the general formula: R-N(R')(R"), wherein R, R', and R" denote a hydrogen or an organic moiety (such as alkyl, aryl, or silyl groups), including those bearing heteroatom-containing substituent groups. In certain embodiments, R, R', and R" denote a hydrogen or an alkyl, alkenyl, aryl, or alcohol groups. In certain embodiments, the term "amines" may refer to a group of compounds with the general formula described above, wherein the compounds have different carbon lengths. The term "amino" refers to a -N(R)(R') moiety. In some cases, an alcohol can have more than two or more amino groups. As used herein, "diamine" and "polyamine" refer to amines having two or more amino groups.

As used herein, "isocyanate" or "isocyanates" refer to compounds having the general formula: R-NCO, wherein R denotes any organic moiety (such as alkyl, aryl, or silyl groups), including those bearing heteroatom-containing substituent groups. In certain embodiments, R denotes alkyl, alkenyl, aryl, or alcohol groups. In certain embodiments, the term "isocyanate" or "isocyanates" may refer to a group of compounds with the general formula described above, wherein the compounds have different carbon lengths. The term "isocyanato" refers to a -NCO moiety. In some cases, an isocyanate can have more than two or more isocyanato groups. As used herein, "diisocyanate" and "polyisocyanate" refer to isocyanates having two or more isocyanato groups.

As used herein, "hydrocarbon" refers to an organic group composed of carbon and hydrogen, which can be saturated or unsaturated, and can include aromatic groups. The term "hydrocarbyl" refers to a monovalent or polyvalent (e.g., divalent or higher) hydrocarbon moiety. In some instances, a divalent hydrocarbyl group can be referred to as a "hydrocarbylene" group.

As used herein, "olefin" or "olefins" refer to compounds having at least one unsaturated carbon-carbon double bond. In certain embodiments, the term "olefins" refers to a group of unsaturated carbon-carbon double bond compounds with different carbon lengths. Unless noted otherwise, the terms "olefin" or "olefins" encompasses "polyunsaturated olefins" or "poly-olefins," which have more than one carbon-carbon double bond. As used herein, the term "monounsaturated olefins" or "mono-olefins" refers to compounds having only one carbon-carbon double bond.

In some instances, the olefin can be an "alkene," which refers to a straight- or branched-chain non-aromatic hydrocarbon having 2 to 30 carbon atoms and one or more carbon-carbon double bonds, which may be optionally substituted, as herein further described, with multiple degrees of substitution being allowed. A "monounsaturated alkene" refers to an alkene having one carbon-carbon double bond, while a "polyunsaturated alkene" refers to an alkene having two or more carbon-carbon double bonds. A "lower alkene," as used herein, refers to an alkene having from 2 to 8 carbon atoms.

As used herein, "alpha-olefin" refers to an olefin (as defined above) that has a terminal carbon-carbon double bond. In some embodiments, the alpha-olefin is a terminal alkene, which is an alkene (as defined above) having a terminal carbon-carbon double bond. Additional carbon-carbon double bonds can be present.

As used herein, "alkyl" refers to a straight or branched chain saturated hydrocarbon having 1 to 30 carbon atoms, which may be optionally substituted, as herein further described, with multiple degrees of substitution being allowed. Examples of "alkyl," as used herein, include, but are not limited to, methyl, ethyl, n-propyl, isopropyl, isobutyl, n-butyl, sec-butyl, tert-butyl, isopentyl, n-pentyl, neopentyl, n-hexyl, and 2-ethylhexyl. The number carbon atoms in an alkyl group is represented by the phrase "C_{x-y} alkyl," which refers to an alkyl group, as herein defined, containing from x to y, inclusive, carbon atoms. Thus, "C₁₋₆ alkyl" represents an alkyl chain having from 1 to 6 carbon atoms and, for example, includes, but is not limited to, methyl, ethyl, n-propyl, isopropyl, isobutyl, n-butyl, sec-butyl, tert-butyl, isopentyl, n-pentyl, neopentyl, and n-hexyl. In some instances, the "alkyl" group can be divalent, in which case the group can alternatively be referred to as an "alkylene" group. Also, in some instances, one or more of the carbon atoms in the alkyl or alkylene group can be replaced by a heteroatom (e.g., selected from nitrogen, oxygen, or sulfur, including N-oxides, sulfur oxides, and sulfur dioxides, where feasible), and is referred to as a "heteroalkyl" or "heteroalkylene" group. In some instances, one or more of the carbon atoms in the alkyl or alkylene group can be replaced by an oxygen atom, and is referred to as an "oxyalkyl" or "oxyalkylene" group.

As used herein, "alkenyl" refers to a straight or branched chain non-aromatic hydrocarbon having 2 to 30 carbon atoms and having one or more carbon-carbon double bonds, which may be optionally substituted, as herein further described, with multiple degrees of substitution being allowed. Examples of "alkenyl," as used herein, include, but are not limited to, ethenyl, 2-propenyl, 2-butenyl, and 3-butenyl. The number carbon atoms in an alkenyl group is represented by the phrase "C_{x-y} alkenyl," which refers to an alkenyl group, as herein defined, containing from x to y, inclusive, carbon atoms. Thus, "C₂₋₆ alkenyl" represents an alkenyl chain having from 2 to 6 carbon atoms and, for example, includes, but is not limited to, ethenyl, 2-propenyl, 2-butenyl, and 3-butenyl. In some instances, the "alkenyl" group can be divalent, in which case the group can alternatively be referred to as an "alkenylene" group. Also, in some instances, one or more of the saturated carbon atoms in the alkenyl or alkenylene group can be replaced by a heteroatom (e.g., selected from nitrogen, oxygen, or sulfur, including N-oxides, sulfur oxides, and sulfur dioxides, where feasible), and is referred to as a "heteroalkenyl" or "heteroalkenylene" group. In some instances, one or more of the carbon atoms in the alkenyl or alkenylene group can be replaced by an oxygen atom, and is referred to as an "oxyalkenyl" or "oxyalkenylene" group.

As used herein, "cycloalkyl" refers to a 3- to 24-membered, cyclic hydrocarbon ring, which may be optionally substituted as herein further described, with multiple degrees of substitution being allowed. Such "cycloalkyl" groups are monocyclic or polycyclic. The term "cycloalkyl," as used herein, does not include ring systems that contain aromatic rings, but does include ring systems that can have one or more degrees of unsaturation. Examples of "cycloalkyl" groups, as used herein, include, but are not limited to, cyclopropyl, cyclobutyl, cyclopentyl, cyclohexyl, cycloheptyl, 1-norbornyl, 2-norbornyl, 7-norbornyl, 1-adamantyl, and 2-adamantyl. In some instances, the "cycloalkyl" group can be divalent, in which case the group can alternatively be referred to as a "cycloalkylene" group. Also, in some instances, one or more of the carbon atoms in the cycloalkyl or cycloalkylene group can be replaced by a heteroatom (e.g., selected from nitrogen, oxygen, or sulfur, including N-oxides, sulfur oxides, and sulfur dioxides, where feasible), and is referred to as a "heterocycloalkyl" or "heterocycloalkylene" group.

As used herein, "alkoxy" refers to -OR, where R is an alkyl group (as defined above). The number carbon atoms in an alkyl group is represented by the phrase "C_{x-y} alkoxy," which refers to an alkoxy group having an alkyl group, as herein defined, containing from x to y, inclusive, carbon atoms.

As used herein, "halogen" or "halo" refers to fluorine, chlorine, bromine, and/or iodine. In some embodiments, the terms refer to fluorine and/or chlorine. As used herein, "haloalkyl" or "haloalkoxy" refer to alkyl or alkoxy groups, respectively, substituted by one or more halogen atoms. The terms "perfluoroalkyl" or "perfluoroalkoxy" refer to alkyl groups and alkoxy groups, respectively, where every available hydrogen is replaced by fluorine.

As used herein, "substituted" refers to substitution of one or more hydrogens of the designated moiety with the named substituent or substituents, multiple degrees of substitution being allowed unless otherwise stated, provided that the substitution results in a stable or chemically feasible compound. A stable compound or chemically feasible compound is one in which the chemical structure is not substantially altered when kept at a temperature from about -80 °C to about +40 °C, in the absence of moisture or other chemically reactive conditions, for at least a week. As used herein, the phrases "substituted with one or more ... " or "substituted one or more times ..." refer to a number of substituents that equals from one to the maximum number of substituents possible based on the number of available bonding sites, provided that the above conditions of stability and chemical feasibility are met.

As used herein, "optionally" means that the subsequently described event(s) may or may not occur. In some embodiments, the optional event does not occur. In some other embodiments, the optional event does occur one or more times.

As used herein, "comprise" or "comprises" or "comprising" or "comprised of" refer to groups that are open, meaning that the group can include additional members in addition to those expressly recited. For example, the phrase, "comprises A" means that A must be present, but that other members can be present too. The terms "include," "have," and "composed of" and their grammatical variants have the same meaning. In contrast, "consist of" or "consists of" or "consisting of" refer to groups that are closed. For example, the phrase "consists of A" means that A and only A is present.

As used herein, "or" is to be given its broadest reasonable interpretation, and is not to be limited to an either/or construction. Thus, the phrase "comprising A or B" means that A can be present and not B, or that B is present and not A, or that A and B are both present. Further, if A, for example, defines a class that can have multiple members, e.g., A₁ and A₂, then one or more members of the class can be present concurrently.

As used herein, the various functional groups represented will be understood to have a point of attachment at the functional group having the hyphen or dash (-) or an asterisk (*). In other words, in the case of -CH₂CH₂CH₃, it will be understood that the point of attachment is the CH₂ group at the far left. If a group is recited without an asterisk or a dash, then the attachment point is indicated by the plain and ordinary meaning of the recited group.

As used herein, multi-atom bivalent species are to be read from left to right. For example, if the specification or claims recite A-D-E and D is defined as -OC(O)-, the resulting group with D replaced is: A-OC(O)-E and not A-C(O)O-E.

Other terms are defined in other portions of this description, even though not included in this subsection.

### Polyester Polyols

In at least one aspect, the disclosure provides polyester polyols that contain a long-chain aliphatic group as part of one or more of its repeating constitutional units. In some embodiments, the constitutional units containing the long-chain aliphatic group are derived from a dibasic acid, or an ester thereof. In some such embodiments, the polyester polyol contains other constitutional units, for example, constitutional units derived from one or more diols, which can react with the dibasic acids/esters to form a polyester.

In some embodiments, the polyester polyols include constitutional units derives from dibasic acids or esters thereof. In some such embodiments, the polyester polyols include, among other features, one or more constitutional units according to formula (I): 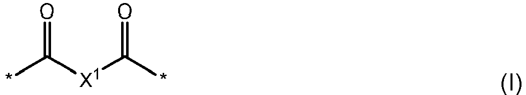
wherein X¹ is -(CH₂)₁₆- which is optionally substituted one or more times by substituents selected independently from R¹; and
R¹ is a halogen atom, -OH, -NH₂, C₁₋₆ alkyl, C₁₋₆ heteroalkyl, C₂₋₆ alkenyl, C₂₋₆ heteroalkenyl, C₃₋₁₀ cycloalkyl, or C₂₋₁₀ heterocycloalkyl.

The polyester polyols disclosed herein include additional constitutional units as well. In some embodiments, the additional constitutional units include constitutional units derived from diols. Thus, in some embodiments, the polyester polyol further includes one or more constitutional units according to formula (II): 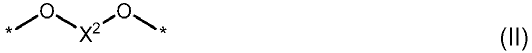 wherein X² is C₂₋₁₈ hydrocarbylene, where one or more saturated carbon atoms of the hydrocarbylene group are optionally replaced by oxygen, nitrogen, sulfur, or silicon.

In some embodiments, X² is C₂₋₁₈ alkylene, C₂₋₁₈ alkenylene, C₂₋₁₈ heteroalkylene, or C₂₋₁₈ heteroalkenylene, each of which is optionally substituted one or more times by substituents selected independently from the group consisting of: a halogen atom, -OH, -NH₂, C₁₋₆ alkyl, C₁₋₆ heteroalkyl, C₂₋₆ alkenyl, C₂₋₆ heteroalkenyl, C₃₋₁₀ cyclokalkyl, and C₂₋₁₀ heterocycloalkyl.

In some embodiments, X² is C₂₋₁₈ alkylene, C₂₋₁₈ alkenylene, or C₂₋₁₈ oxyalkylene, each of which is optionally substituted one or more times by substituents selected from the group consisting of a halogen atom, -OH, -O(C₁₋₆ alkyl), -NH₂, -NH(C₁₋₆ alkyl), and -N(C₁₋₆alkyl)₂. In some such embodiments, X² is C₂₋₁₈ alkylene or C₂₋₁₈ alkenylene, each of which is optionally substituted one or more times by substituents selected from the group consisting of a halogen atom, -OH, -O(C₁₋₆ alkyl), -NH₂, -NH(C₁₋₆ alkyl), and -N(C₁₋₆alkyl)₂. In some embodiments, X² is C₂₋₁₈ alkylene, which is optionally substituted one or more times by substituents selected from the group consisting of a halogen atom, -OH, -O(C₁₋₆ alkyl), -NH₂, -NH(C₁₋₆ alkyl), and -N(C₁₋₆alkyl)₂.

In some embodiments, X² is C₂₋₁₈ alkylene, C₂₋₁₈ alkenylene, or C₂₋₁₈ oxyalkylene, each of which is optionally substituted one or more times by -OH. In some embodiments, X² is C₂₋₁₈ alkylene or C₂₋₁₈ alkenylene, each of which is optionally substituted one or more times by -OH. In some embodiments, X² is C₂₋₁₈ alkylene, which is optionally substituted one or more times by -OH.

In some embodiments, X² is -(CH₂)₂-, -(CH₂)₃-, -(CH₂)₄-, -(CH₂)₅-, -(CH₂)₆-, -(CH₂)₇-, -(CH₂)₈-, -(CH₂)₉-, -(CH₂)₁₀-, -(CH₂)₁₁-, -(CH₂)₁₂-, -(CH₂)₁₃-, -(CH₂)₁₄-, -(CH₂)₁₅-, or -(CH₂)₁₆-. In some embodiments, X² is -(CH₂)₄-, -(CH₂)₆-, or -(CH₂)₈-.

In some embodiments, X² comprises an aliphatic cyclic group. Thus, in some embodiments, X² is C₅₋₁₀ cycloalkylene, -(C₁₋₄alkylene)-(C₅₋₁₀ cycloalkylene)-, -(C₅₋₁₀ cycloalkylene)-(C₁₋₄ alkylene)-, or -(C₁₋₄ alkylene )-(C₅₋₁₀ cycloalkylene)-(C₁₋₄ alkylene)-. In some embodiments, X² is C₅₋₁₀ cycloalkylene or -(C₁₋₄ alkylene)-(C₅₋₁₀ cycloalkylene)-(C₁₋₄alkylene)-. In some embodiments, X² is -(C₁₋₄ alkylene)-(C₅₋₁₀ cycloalkylene)-(C₁₋₄ alkylene)-. In some such embodiments, X² is -CH₂-(1,4-cyclohexylene)-CH₂-.

Other constitutional units can also be included. The polyester polyols disclosed herein, however, are predominantly made up of constitutional units joined by ester groups, e.g., ester groups formed from condensation reactions of diols with dibasic acids or esters thereof. In some embodiments, at least 70% of the constitutional units, or at least 80% of the constitutional units, or at least 85% of the constitutional units, or at least 90% of the constitutional units, or at least 95% of the constitutional units, or at least 97% of the constitutional units, in the polyester polyol are joined to one or more other constitutional units by an ester linkage, based on the total number of constitutional units in the polyester polyol.

In some embodiments, the polyester polyol includes at least two free hydroxyl groups, e.g., which are free to react with other groups (acids, isocyanates, and the like) to form graft copolymers or block copolymers. In some such embodiments, at least two of the two or more free hydroxyl groups are attached to a primary carbon, i.e., meaning that the hydroxyl is bonded to a carbon atom that is attached to only one other carbon atom, i.e., is part of a -CH₂-OH moiety.

The polyester polyols can be made in any suitable manner. In some embodiments, they can be formed from a reaction mixture that includes, among other things, diols, such as short-chain diols, and dibasic acids (or esters thereof). In some such embodiments, the polyol esters can be formed by condensation reactions.

The acid or ester used is 1,18-octadecanedioic acid, or any esters thereof.

The free acid or esterified forms of any of the above acids can be used. In some embodiments, the free acid is used. In some other embodiments, esterified forms (e.g., monobasic esters or dibasic esters) of the aforementioned acids are used. In some such embodiments, the dibasic esters of the aforementioned acids are used. Any suitable ester can be used. In some embodiments, the ester is an alkyl ester, such as a C₁₋₈ alkyl ester. In some such embodiments, the ester is a methyl ester, an ethyl ester, a propyl ester, an isopropyl ester, a butyl ester, an isobutyl ester, a sec-butyl ester, a tert-butyl ester, a pentyl ester, an isoamyl ester, a neopentyl ester, a hexyl ester, a 2-ethylhexyl ester, or any mixture thereof. In some embodiments, the ester is a methyl ester or an ethyl ester.

In some embodiments, the reaction mixture is substantially free of a monobasic acid or an ester thereof. As used herein, "monobasic acid" refers to a compound having a single acid group, and which has no functional groups that can be readily hydrolyzed to an acid group (e.g., simple carboxylate esters, carboxylate salts, anhydrides and the like). Non-limiting examples of monobasic acids include, but are not limited to, decanoic acid, dodecanoic acid, and the like. In some embodiments, the weight-to-weight ratio of dibasic acids (or esters thereof) to monobasic acids (or esters thereof) is at least 50:1, or at least 100:1, or at least 150:1, or at least 200:1, or at least 300:1, based on the total weight of the acid portions of the respective acids/esters.

In some embodiments, the acid or ester in the reaction mixture may include acids or esters predominantly of a single chain length. For example, in some embodiments, the acid or ester in the reaction mixture may be mostly 1,18-octadecanedioic acid or an ester thereof (e.g., an alkyl ester, such as a methyl, ethyl, or isopropyl ester). In some such embodiments, at least 80% by weight, or at least 85% by weight, or at least 90% by weight, or at least 95% by weight, or at least 97% by weight of the dibasic acid (or esters thereof) in the reaction mixture is 1,18-octadecanedioic acid or an ester thereof. In some such embodiments, the other dibasic acids (or esters thereof) in the reaction mixture primarily have carbon-chain lengths that are greater than that of 1,18-octadecanedioic acid, such as 1,20-icosanedioic acid. Thus, in some embodiments, the reaction mixture is substantially free of dibasic acids (or esters thereof) having carbon-chain lengths less than that of 1,18-octadecanedioic acid, such as 1,16-hexadecanedioic acid, and the like. In some such embodiments, the weight-to-weight ratio of 1,18-octadecanedioic acid (including esters thereof) to dibasic acids (including esters thereof) having carbon-chain lengths less than that of 1,18-octadecanedioic acid is at least 20:1, or at least 25:1, or at least 30:1, or at least 40:1, or at least 50:1, or at least 65:1, or at least 100:1, based on the total weight of the dibasic acid portions of the respective acids/esters.

As noted above, the reaction mixture can also include one or more diols, such as short-chain diols. As used herein, "short-chain diol" refers to a diol having from 1 to 18 carbon atoms. In some embodiments, the short-chain diol is a C₂₋₁₈ hydrocarbylene diol, where one or more saturated carbon atoms of the hydrocarbylene group are optionally replaced by oxygen, nitrogen, sulfur, or silicon. In some other embodiments, the short-chain diol is ethylene glycol, diethylene glycol, triethylene glycol, tetraethylene glycol, pentaethylene glycol, propylene glycol, dipropylene glycol, tripropylene glycol, tetrapropylene glycol, 1,3-propanediol, 1,3-butanediol, 1,4-butanediol, neopentyl glycol, 1,5-pentanediol, 1,6-hexanediol, 1,4-cyclohexane-dimethanol, hydroquinone bis(2-hydroxyethyl)ether, or p-di-(2-hydroxyethoxy)benzene, or any mixture thereof. In some other embodiments, the short-chain diol is 1,4-butanediol, 1,5-pentanediol, 1,6-hexanediol, 1,7-deptanediol, 1,8-octanediol, 1,9-nonanediol, 1,10-decanediol, 1,11-undecanediol, 1,12-dodecanediol, or any mixture thereof. In some further embodiments, the short-chain diol is 1,4-butanediol, 1,6-hexanediol, 1,8-octanediol, 1,10-decanediol, or any mixtures thereof. In some further embodiments, the short-chain diol is 1,4-butanediol. In some embodiments, the short-chain diol is 1,6-hexanediol. In some embodiments, the short-chain diol is 1,4-cyclohexane dimethanol.

In some embodiments, the polyester polyol can include a combination of two or more diols. For example, in some embodiments, the polyester polyol includes a mixture of two or more of 1,4-butanediol, 1,5-pentanediol, 1,6-hexanediol, 1,7-deptanediol, 1,8-octanediol, 1,9-nonanediol, 1,10-decanediol, 1,11-undecanediol, 1,12-dodecanediol, or any mixture thereof. In some further embodiments, the short-chain diol is 1,4-butanediol, 1,6-hexanediol, 1,8-octanediol, or 1,10-decanediol. For example, in some embodiments, the polyester polyol is formed from a mixture of 1,6-hexanediol with another diol, such as 1,4-hexanediol. In some embodiments, the polyester polyol is formed from a mixture of 1,6-hexanediol and 1,4-hexanediol, where the mole-to-mole ratio of 1,6-hexanediol to 1,4-butanediol ranges from 1:5 to 5:1, or from 1:3 to 3:1, or from 1:2 to 2:1, or from 1:1.5 to 1.5:1.

The reaction mixture can include any number of other species, as long as the species would not interfere substantially with the condensation reaction between the dibasic acids/esters and the diols. In some embodiments, the reaction mixture can include an amount of an acid and/or a base to adjust the pH of the reaction mixture. Further, in some embodiments, an amount of a heterogeneous or homogeneous catalyst can be present to facilitate the reaction. Suitable catalysts include, but are not limited to, organic acids or bases, organometallic compounds, enzymes, and the like.

Any suitable medium can be used in the reaction mixture. In some embodiments, the medium is an aqueous medium. In some embodiments, the aqueous medium includes, in addition to water, an amount of one or more other solvents that are substantially miscible with water, such as methanol, ethanol, acetone, and the like.

The polyester polyol can have any suitable molecular weight. In some embodiments, the molecular weight of the polyester polyol is 500 Da to 100,000 Da, or 500 Da to 50,000 Da, or 1,000 Da to 20,000 Da, or 1,000 Da to 10,000 Da, or 2,000 Da to 7,500 Da, or 3,000 Da to 5,000 Da. In some embodiments, the molecular weight of the polyester polyol is about 4,000 Da. In some embodiments, the molecular weight of the polyester polyol is 500 Da to 20,000 Da, or 500 Da to 10,000 Da, or 500 Da to 4,000 Da, or 500 Da to 3,000 Da. In some embodiments, the molecular weight of the polyester polyol is about 1,000 Da. In some embodiments, the molecular weight of the polyester polyol is about 2,000 Da.

In embodiments where a plurality of polyester polyols are formed, the resulting composition can be characterized in terms of an average molecular weight, such as a number average molecular weight (Mₙ), of the polyester polyols in the composition. In some embodiments, the number average molecular weight of the polyester polyol is 500 Da to 100,000 Da, or 500 Da to 50,000 Da, or 1,000 Da to 20,000 Da, or 1,000 Da to 10,000 Da, or 2,000 Da to 7,500 Da, or 3,000 Da to 5,000 Da. In some embodiments, the number average molecular weight of the polyester polyol is about 4,000 Da. In some embodiments, the number average molecular weight of the polyester polyol is 500 Da to 20,000 Da, or 500 Da to 10,000 Da, or 500 Da to 4,000 Da, or 500 Da to 3,000 Da. In some embodiments, the number average molecular weight of the polyester polyol is about 1,000 Da. In some embodiments, the number average molecular weight of the polyester polyol is about 2,000 Da.

In some embodiments, the polyester polyol can include certain units that can serve as potential sites for crosslinking. Such crosslinking sites can be incorporated into the polyester polyol by adding a small amount of a precursor to the reaction mixture, which reacts with one or both of the diols and/or acids/esters, and is thereby incorporated into the chain. Or, in some embodiments, crosslinking sites can be formed by introducing crosslinking agents, which can include substances having two or more functional groups that can react with existing functional groups in the polyester polyol chain.

In some instances, it may be useful to characterize the polyester polyols disclosed herein according to their melting point. In some embodiments, the polyester polyols have a melting point that is no more than 120 °C, or no more than 110 °C, or no more than 100 °C, or no more than 90 °C, or no more than 85 °C, or no more than 80 °C.

In some instances, it may be useful to characterize the polyester polyols disclosed herein according to their hydrolytic stability. As used herein, "hydrolytic stability" refers to the degree to which the polyester polyol breaks down over time during certain storage conditions. In general, the breakdown is measured by an "acid value," which is the weight of potassium hydroxide (in milligrams) needed to neutralize the acid generated from one (1) gram of the polyester polyol. The breakdown is measured over time, where the polyester polyol is stored at 120 °C (at about 1 atm pressure) in a composition that includes 3 pph (weight relative to polyester polyol) water. The acid value is measured at 7 days, 14 days, 21 days, and 28 days. The measurements are taken in a sealed container. In some embodiments, the polyester polyol shows no more than a 50% increase, or no more than a 40% increase, or no more than a 30% increase, or no more than a 20% increase, or no more than a 10% increase, in its acid value from the seventh (7th) day of storage to the twenty-first (21st) day of storage.

In some other embodiments, the polyester polyol can be characterized as having a certain melting point (T_{g}). Thus, in some embodiments, the polyester polyol has a T_{g} of at least 40 °C, or at least 50 °C, or at least 60 °C.

In some embodiments, at least a portion of the polyester polyol is derived from a renewable source, such as a natural oil or its derivatives. For example, in some embodiments, at least a portion of the short-chain diol can be derived from a renewable source. In some embodiments, at least a portion of the dibasic acid (or esters thereof) are derived from a renewable source. Methods of making dibasic acids and their esters are described, for example, in U.S. Patent Application Publication Nos. 2009/0264672 and 201 3/0085288. Methods of making chemical compounds from renewable sources (e.g., using olefin metathesis) are described in further detail below.

### Polymer Components Derived from Renewable Feedstocks

Due to the non-renewability of petroleum-based materials, it may be desirable to obtain some of the components of a polymer from certain renewable feedstocks. For example, in some embodiments, one or more components of a polymer can be obtained from certain renewable feedstocks, such as natural oils and their derivatives.

Olefin metathesis provides one possible means to convert certain natural oil feedstocks into olefins and esters that can be used in a variety of applications, or that can be further modified chemically and used in a variety of applications. In some embodiments, a composition (or components of a composition) may be formed from a renewable feedstock, such as a renewable feedstock formed through metathesis reactions of natural oils and/or their fatty acid or fatty ester derivatives. When compounds containing a carbon-carbon double bond undergo metathesis reactions in the presence of a metathesis catalyst, some or all of the original carbon-carbon double bonds are broken, and new carbon-carbon double bonds are formed. The products of such metathesis reactions include carbon-carbon double bonds in different locations, which can provide unsaturated organic compounds having useful chemical properties.

Other techniques can also be used to convert renewable feedstocks to compounds useful as components for polymers. For example, one can use fermentation or use certain biological organisms to break down natural oils and release olefins and esters that can be used in polymeric materials or be modified to be used in polymeric materials.

### Olefin Metathesis

In some embodiments, one or more of the unsaturated monomers can be made by metathesizing a natural oil or natural oil derivative. The terms "metathesis" or "metathesizing" can refer to a variety of different reactions, including, but not limited to, cross-metathesis, self-metathesis, ring-opening metathesis, ring-opening metathesis polymerizations ("ROMP"), ring-closing metathesis ("RCM"), and acyclic diene metathesis ("ADMET"). Any suitable metathesis reaction can be used, depending on the desired product or product mixture.

In some embodiments, after any optional pre-treatment of the natural oil feedstock, the natural oil feedstock is reacted in the presence of a metathesis catalyst in a metathesis reactor. In some other embodiments, an unsaturated ester (e.g., an unsaturated glyceride, such as an unsaturated triglyceride) is reacted in the presence of a metathesis catalyst in a metathesis reactor. These unsaturated esters may be a component of a natural oil feedstock, or may be derived from other sources, e.g., from esters generated in earlier-performed metathesis reactions. In certain embodiments, in the presence of a metathesis catalyst, the natural oil or unsaturated ester can undergo a self-metathesis reaction with itself. In other embodiments, the natural oil or unsaturated ester undergoes a cross-metathesis reaction with the low-molecular-weight olefin or mid-weight olefin. The self-metathesis and/or cross-metathesis reactions form a metathesized product wherein the metathesized product comprises olefins and esters.

In some embodiments, the low-molecular-weight olefin is in the C₂₋₆ range. As a non-limiting example, in one embodiment, the low-molecular-weight olefin may comprise at least one of: ethylene, propylene, 1-butene, 2-butene, isobutene, 1-pentene, 2-pentene, 3-pentene, 2-methyl-1-butene, 2-methyl-2-butene, 3-methyl-1-butene, cyclopentene, 1,4-pentadiene, 1-hexene, 2-hexene, 3-hexene, 4-hexene, 2-methyl-1-pentene, 3-methyl-1-pentene, 4-methyl-1-pentene, 2-methyl-2-pentene, 3-methyl-2-pentene, 4-methyl-2-pentene, 2-methyl-3-pentene, and cyclohexene. In some instances, a higher-molecular-weight olefin can also be used.

In some embodiments, the metathesis comprises reacting a natural oil feedstock (or another unsaturated ester) in the presence of a metathesis catalyst. In some such embodiments, the metathesis comprises reacting one or more unsaturated glycerides (e.g., unsaturated triglycerides) in the natural oil feedstock in the presence of a metathesis catalyst. In some embodiments, the unsaturated glyceride comprises one or more esters of oleic acid, linoleic acid, linoleic acid, or combinations thereof. In some other embodiments, the unsaturated glyceride is the product of the partial hydrogenation and/or the metathesis of another unsaturated glyceride (as described above). In some such embodiments, the metathesis is a cross-metathesis of any of the aforementioned unsaturated triglyceride species with another olefin, e.g., an alkene. In some such embodiments, the alkene used in the cross-metathesis is a lower alkene, such as ethylene, propylene, 1-butene, 2-butene, etc. In some embodiments, the alkene is ethylene. In some other embodiments, the alkene is propylene. In some further embodiments, the alkene is 1-butene. And in some even further embodiments, the alkene is 2-butene.

Metathesis reactions can provide a variety of useful products, when employed in the methods disclosed herein. For example, terminal olefins and internal olefins may be derived from a natural oil feedstock, in addition to other valuable compositions. Moreover, in some embodiments, a number of valuable compositions can be targeted through the self-metathesis reaction of a natural oil feedstock, or the cross-metathesis reaction of the natural oil feedstock with a low-molecular-weight olefin or mid-weight olefin, in the presence of a metathesis catalyst. Such valuable compositions can include fuel compositions, detergents, surfactants, and other specialty chemicals. Additionally, transesterified products (i.e., the products formed from transesterifying an ester in the presence of an alcohol) may also be targeted, non-limiting examples of which include: fatty acid methyl esters ("FAMEs"); biodiesel; 9-decenoic acid ("9DA") esters, 9-undecenoic acid ("9UDA") esters, and/or 9-dodecenoic acid ("9DDA") esters; 9DA, 9UDA, and/or 9DDA; alkali metal salts and alkaline earth metal salts of 9DA, 9UDA, and/or 9DDA; dimers of the transesterified products; and mixtures thereof.

Further, in some embodiments, the methods disclosed herein can employ multiple metathesis reactions. In some embodiments, the multiple metathesis reactions occur sequentially in the same reactor. For example, a glyceride containing linoleic acid can be metathesized with a terminal lower alkene (e.g., ethylene, propylene, 1-butene, and the like) to form 1,4-decadiene, which can be metathesized a second time with a terminal lower alkene to form 1,4-pentadiene. In other embodiments, however, the multiple metathesis reactions are not sequential, such that at least one other step (e.g., transesterification, hydrogenation, etc.) can be performed between the first metathesis step and the following metathesis step. These multiple metathesis procedures can be used to obtain products that may not be readily obtainable from a single metathesis reaction using available starting materials. For example, in some embodiments, multiple metathesis can involve self-metathesis followed by cross-metathesis to obtain metathesis dimers, trimmers, and the like. In some other embodiments, multiple metathesis can be used to obtain olefin and/or ester components that have chain lengths that may not be achievable from a single metathesis reaction with a natural oil triglyceride and typical lower alkenes (e.g., ethylene, propylene, 1-butene, 2-butene, and the like). Such multiple metathesis can be useful in an industrial-scale reactor, where it may be easier to perform multiple metathesis than to modify the reactor to use a different alkene.

The metathesis process can be conducted under any conditions adequate to produce the desired metathesis products. For example, stoichiometry, atmosphere, solvent, temperature, and pressure can be selected by one skilled in the art to produce a desired product and to minimize undesirable byproducts. In some embodiments, the metathesis process may be conducted under an inert atmosphere. Similarly, in embodiments were a reagent is supplied as a gas, an inert gaseous diluent can be used in the gas stream. In such embodiments, the inert atmosphere or inert gaseous diluent typically is an inert gas, meaning that the gas does not interact with the metathesis catalyst to impede catalysis to a substantial degree. For example, non-limiting examples of inert gases include helium, neon, argon, and nitrogen, used individually or in with each other and other inert gases.

The rector design for the metathesis reaction can vary depending on a variety of factors, including, but not limited to, the scale of the reaction, the reaction conditions (heat, pressure, etc.), the identity of the catalyst, the identity of the materials being reacted in the reactor, and the nature of the feedstock being employed. Suitable reactors can be designed by those of skill in the art, depending on the relevant factors, and incorporated into a refining process such, such as those disclosed herein.

The metathesis reactions disclosed herein generally occur in the presence of one or more metathesis catalysts. Such methods can employ any suitable metathesis catalyst. The metathesis catalyst in this reaction may include any catalyst or catalyst system that catalyzes a metathesis reaction. Any known metathesis catalyst may be used, alone or in combination with one or more additional catalysts. Examples of metathesis catalysts and process conditions are described in US 2011/0160472, except that in the event of any inconsistent disclosure or definition from the present specification, the disclosure or definition herein shall be deemed to prevail. A number of the metathesis catalysts described in US 2011/0160472 are presently available from Materia, Inc. (Pasadena, Calif.).

In some embodiments, the metathesis catalyst includes a Grubbs-type olefin metathesis catalyst and/or an entity derived therefrom. In some embodiments, the metathesis catalyst includes a first-generation Grubbs-type olefin metathesis catalyst and/or an entity derived therefrom. In some embodiments, the metathesis catalyst includes a second-generation Grubbs-type olefin metathesis catalyst and/or an entity derived therefrom. In some embodiments, the metathesis catalyst includes a first-generation Hoveyda-Grubbs-type olefin metathesis catalyst and/or an entity derived therefrom. In some embodiments, the metathesis catalyst includes a second-generation Hoveyda-Grubbs-type olefin metathesis catalyst and/or an entity derived therefrom. In some embodiments, the metathesis catalyst includes one or a plurality of the ruthenium carbene metathesis catalysts sold by Materia, Inc. of Pasadena, California and/or one or more entities derived from such catalysts. Representative metathesis catalysts from Materia, Inc. for use in accordance with the present teachings include but are not limited to those sold under the following product numbers as well as combinations thereof: product no. C823 (CAS no. 172222-30-9), product no. C848 (CAS no. 246047-72-3), product no. C601 (CAS no. 203714-71-0), product no. C627 (CAS no. 301224-40-8), product no. C571 (CAS no. 927429-61-6), product no. C598 (CAS no. 802912-44-3), product no. C793 (CAS no. 927429-60-5), product no. C801 (CAS no. 194659-03-9), product no. C827 (CAS no. 253688-91-4), product no. C884 (CAS no. 900169-53-1), product no. C833 (CAS no. 1020085-61-3), product no. C859 (CAS no. 832146-68-6), product no. C711 (CAS no. 635679-24-2), product no. C933 (CAS no. 373640-75-6).

In some embodiments, the metathesis catalyst includes a molybdenum and/or tungsten carbene complex and/or an entity derived from such a complex. In some embodiments, the metathesis catalyst includes a Schrock-type olefin metathesis catalyst and/or an entity derived therefrom. In some embodiments, the metathesis catalyst includes a high-oxidation-state alkylidene complex of molybdenum and/or an entity derived therefrom. In some embodiments, the metathesis catalyst includes a high-oxidation-state alkylidene complex of tungsten and/or an entity derived therefrom. In some embodiments, the metathesis catalyst includes molybdenum (VI). In some embodiments, the metathesis catalyst includes tungsten (VI). In some embodiments, the metathesis catalyst includes a molybdenum- and/or a tungsten-containing alkylidene complex of a type described in one or more of (a) Angew. Chem. Int. Ed. Engl., 2003, 42, 4592-4633; (b) Chem. Rev., 2002, 102, 145-179; and/or (c) Chem. Rev., 2009, 109, 3211-3226, except that in the event of any inconsistent disclosure or definition from the present specification, the disclosure or definition herein shall be deemed to prevail.

In certain embodiments, the metathesis catalyst is dissolved in a solvent prior to conducting the metathesis reaction. In certain such embodiments, the solvent chosen may be selected to be substantially inert with respect to the metathesis catalyst. For example, substantially inert solvents include, without limitation: aromatic hydrocarbons, such as benzene, toluene, xylenes, etc.; halogenated aromatic hydrocarbons, such as chlorobenzene and dichlorobenzene; aliphatic solvents, including pentane, hexane, heptane, cyclohexane, etc.; and chlorinated alkanes, such as dichloromethane, chloroform, dichloroethane, etc. In some embodiments, the solvent comprises toluene.

In other embodiments, the metathesis catalyst is not dissolved in a solvent prior to conducting the metathesis reaction. The catalyst, instead, for example, can be slurried with the natural oil or unsaturated ester, where the natural oil or unsaturated ester is in a liquid state. Under these conditions, it is possible to eliminate the solvent (e.g., toluene) from the process and eliminate downstream olefin losses when separating the solvent. In other embodiments, the metathesis catalyst may be added in solid state form (and not slurried) to the natural oil or unsaturated ester (e.g., as an auger feed).

The metathesis reaction temperature may, in some instances, be a rate-controlling variable where the temperature is selected to provide a desired product at an acceptable rate. In certain embodiments, the metathesis reaction temperature is greater than -40 °C, or greater than -20 °C, or greater than 0 °C, or greater than 10 °C. In certain embodiments, the metathesis reaction temperature is less than 200 °C, or less than 150 °C, or less than 120 °C. In some embodiments, the metathesis reaction temperature is between 0 °C and 150 °C, or is between 10 °C and 120 °C.

The metathesis reaction can be run under any desired pressure. In some instances, it may be desirable to maintain a total pressure that is high enough to keep the cross-metathesis reagent in solution. Therefore, as the molecular weight of the cross-metathesis reagent increases, the lower pressure range typically decreases since the boiling point of the cross-metathesis reagent increases. The total pressure may be selected to be greater than 0.1 atm (10 kPa), or greater than 0.3 atm (30 kPa), or greater than 1 atm (100 kPa). In some embodiments, the reaction pressure is no more than about 70 atm (7000 kPa), or no more than about 30 atm (3000 kPa). In some embodiments, the pressure for the metathesis reaction ranges from about 1 atm (100 kPa) to about 30 atm (3000 kPa).

### Olefin Metathesis of Renewable Feedstocks

As noted above, olefin metathesis can be used to make one or more of the monomers that may be used in the polymers disclosed herein. In some embodiments, one or more of these monomers are made by metathesizing a natural oil. Any suitable natural oil or natural oil derivative can be used. Examples of natural oils include, but are not limited to, vegetable oils, algae oils, fish oils, animal fats, tall oils, derivatives of these oils, combinations of any of these oils, and the like. Representative non-limiting examples of vegetable oils include rapeseed oil (canola oil), coconut oil, corn oil, cottonseed oil, olive oil, palm oil, peanut oil, safflower oil, sesame oil, soybean oil, sunflower oil, linseed oil, palm kernel oil, tung oil, jatropha oil, mustard seed oil, pennycress oil, camelina oil, hempseed oil, and castor oil. Representative non-limiting examples of animal fats include lard, tallow, poultry fat, yellow grease, and fish oil. Tall oils are by-products of wood pulp manufacture. In some embodiments, the natural oil or natural oil feedstock comprises one or more unsaturated glycerides (e.g., unsaturated triglycerides). In some such embodiments, the natural oil feedstock comprises at least 50% by weight, or at least 60% by weight, or at least 70% by weight, or at least 80% by weight, or at least 90% by weight, or at least 95% by weight, or at least 97% by weight, or at least 99% by weight of one or more unsaturated triglycerides, based on the total weight of the natural oil feedstock.

The natural oil may include canola or soybean oil, such as refined, bleached and deodorized soybean oil (i.e., RBD soybean oil). Soybean oil typically includes about 95 percent by weight (wt%) or greater (e.g., 99 wt% or greater) triglycerides of fatty acids. Major fatty acids in the polyol esters of soybean oil include but are not limited to saturated fatty acids such as palmitic acid (hexadecanoic acid) and stearic acid (octadecanoic acid), and unsaturated fatty acids such as oleic acid (9-octadecenoic acid), linoleic acid (9,12-octadecadienoic acid), and linolenic acid (9,12,15-octadecatrienoic acid).

Examples of metathesized natural oils include but are not limited to a metathesized vegetable oil, a metathesized algal oil, a metathesized animal fat, a metathesized tall oil, a metathesized derivatives of these oils, or mixtures thereof. For example, a metathesized vegetable oil may include metathesized canola oil, metathesized rapeseed oil, metathesized coconut oil, metathesized corn oil, metathesized cottonseed oil, metathesized olive oil, metathesized palm oil, metathesized peanut oil, metathesized safflower oil, metathesized sesame oil, metathesized soybean oil, metathesized sunflower oil, metathesized linseed oil, metathesized palm kernel oil, metathesized tung oil, metathesized jatropha oil, metathesized mustard oil, metathesized camelina oil, metathesized pennycress oil, metathesized castor oil, metathesized derivatives of these oils, or mixtures thereof. In another example, the metathesized natural oil may include a metathesized animal fat, such as metathesized lard, metathesized tallow, metathesized poultry fat, metathesized fish oil, metathesized derivatives of these oils, or mixtures thereof.

Such natural oils can contain esters, such as triglycerides, of various unsaturated fatty acids. The identity and concentration of such fatty acids varies depending on the oil source, and, in some cases, on the variety. In some embodiments, the natural oil comprises one or more esters of oleic acid, linoleic acid, linolenic acid, or any combination thereof. When such fatty acid esters are metathesized, new compounds are formed. For example, in embodiments where the metathesis uses certain short-chain olefins, e.g., ethylene, propylene, or 1-butene, and where the natural oil includes esters of oleic acid, an amount of 1-decene, among other products, is formed. Following transesterification, for example, with an alkyl alcohol, an amount of 9-denenoic acid methyl ester is formed. In some such embodiments, a separation step may occur between the metathesis and the transesterification, where the alkenes are separated from the esters. In some other embodiments, transesterification can occur before metathesis, and the metathesis is performed on the transesterified product.

### Method of Forming a Dibasic Acid bv Metathesis

In certain aspects, the disclosure provides methods of forming a dibasic acid, including: reacting a first olefin ester and an second olefin ester in the presence of a metathesis catalyst to form a first alkene and an unsaturated dibasic ester; hydrogenating the unsaturated dibasic ester to form a saturated dibasic ester; and converting the saturated dibasic ester to a saturated dibasic acid.

The methods include reacting the first olefin ester with the second olefin ester to form an unsaturated dibasic ester. Reactions of olefinic esters to make unsaturated dibasic esters are generally described in PCT Publication WO 2008/140468, and United States Patent Application Publication Nos. 2009/0264672 and 2013/0085288.

The references above describe different ways in which metathesis reactions can be used to make an unsaturated dibasic ester. In some instances, however, two or more different productive metathesis reactions may be occurring at the same time. For example, in embodiments where the first olefin ester is a terminal olefin ester and the second olefin ester is an internal olefin ester, the terminal olefin ester and the internal olefin ester may each react with other molecules of the same compound, such that two self-metathesis reactions may compete with the cross-metathesis reaction. Also, in some embodiments, the terminal olefin ester can be generated from the internal olefin ester, e.g., by reacting the internal olefin ester with a terminal alkene in the presence of a metathesis catalyst. Or, in some alternative embodiments, the internal olefin ester can be generated from the terminal olefin ester, e.g., by reacting the terminal olefin ester with an internal alkene in the presence of a metathesis catalyst. In instances where the cross-metathesis reaction of the terminal olefin ester and the internal olefin ester can be kinetically favored, and where only a single olefin ester may be available, it can be advantageous to use such processes to generate different olefin esters, so as to allow for cross-metathesis to occur at the expense of self-metathesis.

The method includes hydrogenating the unsaturated dibasic ester to generate a saturated dibasic ester. The hydrogenation can be carried by any suitable means. In certain embodiments, hydrogen gas is reacted with the unsaturated dibasic ester in the presence of a hydrogenation catalyst to form a saturated dibasic acid, for example, in a hydrogenation reactor.

Any suitable hydrogenation catalyst can be used. In some embodiments, the hydrogenation catalyst comprises nickel, copper, palladium, platinum, molybdenum, iron, ruthenium, osmium, rhodium, or iridium, individually or in any combinations thereof. Such catalysts may be heterogeneous or homogeneous. In some embodiments, the catalysts are supported nickel or sponge nickel type catalysts. In some embodiments, the hydrogenation catalyst comprises nickel that has been chemically reduced with hydrogen to an active state (i.e., reduced nickel) provided on a support. The support may comprise porous silica (e.g., kieselguhr, infusorial, diatomaceous, or siliceous earth) or alumina. The catalysts are characterized by a high nickel surface area per gram of nickel. Commercial examples of supported nickel hydrogenation catalysts include those available under the trade designations NYSOFACT, NYSOSEL, and NI 5248 D (from BASF Catalysts LLC, Iselin, NJ). Additional supported nickel hydrogenation catalysts include those commercially available under the trade designations PRICAT Ni 62/15 P, PRICAT Ni 55/5, PPRICAT 9910, PRICAT 9920, PRICAT 9908, PRICAT 9936 (from Johnson Matthey Catalysts, Ward Hill, MA).

The supported nickel catalysts may be of the type described in U.S. Patent No. 3,351,566, US Patent No. 6,846,772, European Patent Publication No. 0168091, and European Patent Publication No. 0167201. Hydrogenation may be carried out in a batch or in a continuous process and may be partial hydrogenation or complete hydrogenation. In certain embodiments, the temperature ranges from about 50 °C to about 350 °C, about 100 °C to about 300 °C, about 150 °C to about 250 °C, or about 100 °C to about 150 °C. The desired temperature may vary, for example, with hydrogen gas pressure. Typically, a higher gas pressure will require a lower temperature. Hydrogen gas is pumped into the reaction vessel to achieve a desired pressure of H₂ gas. In certain embodiments, the H₂ gas pressure ranges from about 15 psig (1 barg) to about 3000 psig (204.1 barg), about 15 psig (1 barg) to about 90 psig (6.1 barg), or about 100 psig (6.8 barg) to about 500 psig (34 barg). As the gas pressure increases, more specialized high-pressure processing equipment may be required. In certain embodiments, the reaction conditions are "mild," wherein the temperature is approximately between approximately 50 °C and approximately 100 °C and the H₂ gas pressure is less than approximately 100 psig. In other embodiments, the temperature is between about 100 °C and about 150 °C, and the pressure is between about 100 psig (6.8 barg) and about 500 psig (34 barg). When the desired degree of hydrogenation is reached, the reaction mass is cooled to the desired filtration temperature.

The amount of hydrogenation catalyst is typically selected in view of a number of factors including, for example, the type of hydrogenation catalyst used, the amount of hydrogenation catalyst used, the degree of unsaturation in the material to be hydrogenated, the desired rate of hydrogenation, the desired degree of hydrogenation (e.g., as measure by iodine value (IV)), the purity of the reagent, and the H₂ gas pressure. In some embodiments, the hydrogenation catalyst is used in an amount of about 10 percent by weight or less, for example, about 5 percent by weight or less or about 1 percent by weight or less.

Following the metathesis (described above) the resulting composition can contain various impurities. These impurities can be compounds that were made by various kinds of unproductive metathesis. Or, in some instances, the impurities may result from the presence of impurities in the starting compositions. In any event, it can, in some embodiments, be desirable to strip out and/or distill out these impurities. In some such embodiments, the stripping and/or distilling can occur after the metathesis, but before the hydrogenation. In some alternative embodiments, the stripping and/or distilling can occur after both the metathesis and the hydrogenation. These impurities may contain more esters than hydrocarbons (e.g., monobasic esters), as certain alkene impurities can be vented out of the reactor during the metathesis reaction, e.g., due to the lower relative boiling point of the alkene impurities. Of course, in some instances, these alkene impurities may stay in the reactor long enough to involve themselves in certain metathesis reactions, thereby generating other impurities (e.g., an additional alkene impurity and an additional ester impurity). Paraffin impurities can also be present, which can be removed by the stripping and/or distilling, for example, after hydrogenation.

In some embodiments, the stripping may lead to the removal of certain amounts of the first olefin ester and/or the second olefin ester. In some such embodiments, these stripped out reactants can be collected and reused for further metathesis reactions.

In some embodiments, it may be desirable to further purify the saturated dibasic ester prior to the converting. For example, in some embodiments, the saturated dibasic ester can be recrystallized. The recrystallization can be carried out by any suitable technique. In general, the dissolved in a solvent system, for example, with heating, followed by cooling until solid crystals of the saturated dibasic ester appear. This can be a suitable means of removing impurities that are more soluble in the solvent system than the saturated dibasic ester, e.g., shorter-chain monobasic and dibasic esters and/or acids.

The method includes converting the saturated dibasic ester to a saturated dibasic acid. The concerting can be carried out by any suitable means. In some embodiments, the saturated dibasic ester is hydrolyzed according to any of the embodiments described above. In some other embodiments, the saturated dibasic ester is converted to a saturated dibasic acid by saponification, followed by acidification.

The resulting saturated dibasic acid can be a dibasic acid according to any of the above embodiments. In some embodiments, the dibasic acid is a compound having the formula: H-OOC-Y-COO-H, wherein Y denotes any organic compound (such as hydrocarbyl or silyl groups), including those bearing heteroatom containing substituent groups. In some such embodiments, Y is a divalent hydrocarbyl group, which can be optionally substituted with various heteroatom-containing substituents, or whose carbon atoms can be replaced by one or more heteroatoms. Such divalent hydrocarbyl groups can include substituted and unsubstituted alkylene, alkenylene, and oxyalkylene groups.

In some embodiments, the saturated dibasic acid is undecanedioic acid. In some embodiments, the dibasic ester is tetradecanedioic acid. In some embodiments, the dibasic ester is octadecanedioic acid.

In some embodiments, the saturated dibasic acid can be further purified. In some embodiments, the purification is carried out using the recrystallization methods described above.

Any of the dibasic acids described above can be used to make the polyester polyols disclosed herein. In some embodiments, the conversion of the dibasic ester to the dibasic acid (e.g., by hydrolysis or by saponification followed by acidification) is not performed, thereby resulting in a purified dibasic ester, which can be used to make the polyester polyols disclosed herein. In some other embodiments, the pure dibasic acid can be reacted (e.g., with an alcohol) to generate a purified dibasic ester, which can be used to make the polyester polyols disclosed herein.

### Compositions Including Polyester Polyols

The polyester polyols disclosed herein can be included in certain compositions. In some embodiments, the compositions are compositions that comprise a polyester polyol according to any of the embodiments disclosed herein and a carrier. In some embodiments, the composition is a dispersion. In some such embodiments, the carrier comprises water. In some embodiments, the composition further comprises an additional solvent, a co-solvent, a surfactant, a co-surfactant, an emulsifier, a natural or synthetic colorant, a natural or synthetic fragrance, an antioxidant, a corrosion inhibitor, or an antimicrobial agent.

### Powder Coating Compositions Including Polyester Polyols

In certain aspects, the disclosure provides powder coating compositions, which include a polyester polyol of any of the above aspects or embodiments, and a cross-linking agent. In some such embodiments, the cross-linking agent serves to improve the melt properties of the polyester polyol, allowing it to flow better upon the application of heat during the formation of the coating.

Any suitable cross-linking agent can be used. The selection of the cross-linker can depend on whether the polyester polyol is capped (terminated) with alcohols or acid groups.

For example, in some embodiments, the polyester polyol is capped with carboxylic acid groups. In such embodiments, the cross-linker is a compound containing one or more (e.g., two or more) epoxy groups. Non-limiting examples include triglycidyl isocyanurate. In some other embodiments, the cross-linker is a compound containing one or more (e.g., two or more) hydroxy groups. Non-limiting examples include beta-hydroxyalkyl amides, such as the bis amide of diethanolamine and a short-chain dicarboxylic acid, such as succinic acid, glutaric acid, adipic acid, and the like.

In some other embodiments, the polyester polyol is capped with hydroxyl groups. In some such embodiments, the cross-linker is a compound containing an isocyanate group, such as various blocked isocyanates. In some other embodiments, the cross-linker is a compound containing one or more carboxylic acid, anhydride, amide, or urea (cyclic) groups, such as tetrakis(methoxymethyl) glycoluril.

### Method of Lowering the Melting Point of Polyester Polyols

In certain aspects, the disclosure provides methods of lowering the melting point (Tg) of a polyester polyol, comprising: providing a polyester polyol of any of the aforementioned aspects and embodiments, and contacting the polyester polyol with a cross-linking agent.

Any suitable cross-linking agent can be used. The selection of the cross-linker can depend on whether the polyester polyol is capped with alcohols or acid groups.

For example, in some embodiments, the polyester polyol is capped with carboxylic acid groups. In such embodiments, the cross-linker is a compound containing one or more (e.g., two or more) epoxy groups. Non-limiting examples include triglycidyl isocyanurate. In some other embodiments, the cross-linker is a compound containing one or more (e.g., two or more) hydroxy groups. Non-limiting examples include beta-hydroxyalkyl amides, such as the bis amide of diethanolamine and a short-chain dicarboxylic acid, such as succinic acid, glutaric acid, adipic acid, and the like.

In some other embodiments, the polyester polyol is capped with hydroxyl groups. In some such embodiments, the cross-linker is a compound containing an isocyanate group, such as various blocked isocyanates. In some other embodiments, the cross-linker is a compound containing one or more carboxylic acid, anhydride, amide, or urea (cyclic) groups, such as tetrakis(methoxymethyl) glycoluril.

### EXAMPLES

### Example 1 - Polyester Synthesis

A 1-liter 4-necked flask was set up with a heating mantle, a mechanical stirrer, a condenser, a DS trap, a partial condenser, a thermocouple, and an inlet for nitrogen (N₂) gas. Then, 149.8 grams of 1,4-cyclohexane dimethanol (CHDM) was melted in an oven at 60 °C. Then, 409.5 grams of 1,18-octadecanedioic acid (ODDA) was charged to the flask and melted at 135 °C. After the ODDA was melted, the molten CHDM was charged to the flask along with 0.78 grams of Sn(ll) ethyl hexanoate catalyst. The resulting mixture was heated to 185 °C. Water was removed through a Dean Stark trap. The reaction mixture was heated for about 4 hours, and then cooled to 90 °C. After cooling, the reaction mixture was poured into a jar for storage. The melting point of the polymer was measured and determined to be 55 °C.

### Example 2 - Powder Coating Formulation

First, 250 grams of the polymer from Example 1 was heated to a temperature of 90 °C, thereby melting the resin. Then, 29.9 grams of triglycidyl isocyanurate and 10 grams of Irgazin Red (L 3660) are added to the molten resin, and heated to 110 °C for 10 minutes and mixed under constant agitation.

### Example 3 - Coating

To 3 grams of the formulation of Example 2, blend in 0.3 wt% triphenylphosphine and apply the mixture as a thin coating (2.5 mm thickness) to an aluminum and CRS panel. Then, heat to 220 °C for 30 minutes. The resulting film was determined to be tack-free at 150 °C, and exhibited a gloss of 73 at 60 °C with excellent mechanical and chemical properties. The coating recorded 0T for the T-bend test and showed high solvent resistance.

## Claims

1. A powder coating composition comprising a polyester polyol, wherein the polyester polyol comprises one or more constitutional units according to formula (I): 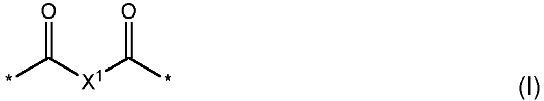
wherein X¹ is -(CH₂)₁₆- which is optionally substituted one or more times by substituents selected independently from R¹; and
R¹ is a halogen atom, -OH, -NH₂, C₁₋₆ alkyl, C₁₋₆ heteroalkyl, C₂₋₆ alkenyl, C₂₋₆ heteroalkenyl, C₃₋₁₀ cycloalkyl, or C₂₋₁₀ heterocycloalkyl.

2. The powder coating composition of claim 1, wherein the polyester polyol further comprises one or more constitutional units according to formula (II): 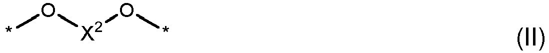 wherein X² is C₂₋₁₈ hydrocarbylene, where one or more saturated carbon atoms of the hydrocarbylene group are optionally replaced by oxygen, nitrogen, sulfur, or silicon.

3. The powder coating composition of claim 2, wherein X² is -(CH₂)₄-, -(CH₂)₆-, or - (CH₂)₈-.

4. The powder coating composition of claim 2, wherein X² is -CH₂-(1,4-cyclohexylene)-CH₂-.

5. The powder coating composition of any one of claims 1 to 4, wherein the polyester polyol is formed from a first reaction mixture, which comprises: a first short-chain diol; and a diacid or an ester thereof.

6. The powder coating composition of claim 5, wherein the diacid is 1,18-octadecanedioic acid, or an ester thereof.

7. The powder coating composition of any one of claims 5 or 6, wherein the first short-chain diol is a C₂₋₁₈ hydrocarbylene diol, where one or more saturated carbon atoms of the hydrocarbylene group are optionally replaced by oxygen, nitrogen, sulfur, or silicon.

8. The powder coating composition of claim 7, wherein the first short-chain diol is ethylene glycol, diethylene glycol, triethylene glycol, tetraethylene glycol, pentaethylene glycol, propylene glycol, dipropylene glycol, tripropylene glycol, tetrapropylene glycol, 1,3-propanediol, 1,3-butanediol, 1,4-butanediol, neopentyl glycol, 1,5-pentanediol, 1,6-hexanediol, 1,4-cyclohexane-dimethanol, hydroquinone bis(2-hydroxyethyl)ether, or p-di-(2-hydroxyethoxy)benzene, or any mixture thereof.

9. The powder coating composition of any one of claims 1 to 8 wherein the weight-to-weight ratio of the diacid to one or more monoacid impurities in the first reaction mixture is at least 100:1.

10. The powder coating composition of any one of claims 1 to 9, further comprising a cross-linking agent.

## Patentansprüche

1. Eine Pulverbeschichtungszusammensetzung, die ein Polyesterpolyol beinhaltet, wobei das Polyesterpolyol eine oder mehrere Struktureinheiten gemäß Formel (I) beinhaltet: 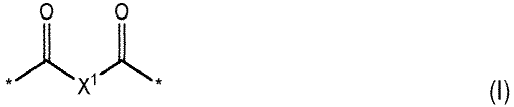
wobei X¹ -(CH₂)₁₆- ist, das optional ein- oder mehrmals durch Substituenten substituiert ist, die unabhängig aus R¹ ausgewählt sind; und
R¹ ein Halogenatom, -OH, -NH₂, C₁₋₆-Alkyl, C₁₋₆-Heteroalkyl, C₂₋₆-Alkenyl, C₂₋₆- Heteroalkenyl, C₃₋₁₀-Cycloalkyl oder C₂₋₁₀-Heterocycloalkyl ist.

2. Pulverbeschichtungszusammensetzung gemäß Anspruch 1, wobei das Polyesterpolyol ferner eine oder mehrere Struktureinheiten gemäß Formel (II) beinhaltet: 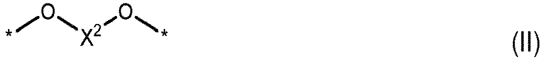 wobei X² C₂₋₁₈-Hydrocarbylen ist, wobei ein oder mehrere gesättigte Kohlenstoffatome der Hydrocarbylengruppe optional durch Sauerstoff, Stickstoff, Schwefel oder Silizium ersetzt sind.

3. Pulverbeschichtungszusammensetzung gemäß Anspruch 2, wobei X² -(CH₂)₄-, -(CH₂)₆- oder -(CH₂)₈- ist.

4. Pulverbeschichtungszusammensetzung gemäß Anspruch 2, wobei X² -CH₂-(1,4- Cyclohexylen)-CH₂- ist.

5. Pulverbeschichtungszusammensetzung gemäß einem der Ansprüche 1 bis 4, wobei das Polyesterpolyol aus einer ersten Reaktionsmischung gebildet ist, die Folgendes beinhaltet: ein erstes kurzkettiges Diol; und eine zweiwertige Säure oder einen Ester davon.

6. Pulverbeschichtungszusammensetzung gemäß Anspruch 5, wobei die zweiwertige Säure 1,18-Octadecandisäure oder ein Ester davon ist.

7. Pulverbeschichtungszusammensetzung gemäß einem der Ansprüche 5 oder 6, wobei das erste kurzkettige Diol ein C₂₋₁₈-Hydrocarbylendiol ist, wobei ein oder mehrere gesättigte Kohlenstoffatome der Hydrocarbylengruppe optional durch Sauerstoff, Stickstoff, Schwefel oder Silizium ersetzt sind.

8. Pulverbeschichtungszusammensetzung gemäß Anspruch 7, wobei das erste kurzkettige Diol Ethylenglycol, Diethylenglycol, Triethylenglycol, Tetraethylenglycol, Pentaethylenglycol, Propylenglycol, Dipropylenglycol, Tripropylenglycol, Tetrapropylenglycol, 1,3-Propandiol, 1,3-Butandiol, 1,4-Butandiol, Neopentylglycol, 1,5-Pentandiol, 1,6-Hexandiol, 1,4-Cyclohexan-dimethanol, Hydrochinon-bis(2-hydroxyethyl)ether oder p-Di-(2-hydroxyethoxy)benzen oder jede beliebige Mischung daraus ist.

9. Pulverbeschichtungszusammensetzung gemäß einem der Ansprüche 1 bis 8, wobei das Gewicht/Gewicht-Verhältnis der zweiwertigen Säure zu einer oder mehreren Verunreinigungen einwertiger Säure in der ersten Reaktionsmischung mindestens 100 : 1 beträgt.

10. Pulverbeschichtungszusammensetzung gemäß einem der Ansprüche 1 bis 9, die ferner ein Vernetzungsmittel beinhaltet.

## Revendications

1. Une composition de revêtement en poudre comprenant un polyol de polyester, le polyol de polyester comprenant une ou plusieurs unités constitutives selon la formule (I) : 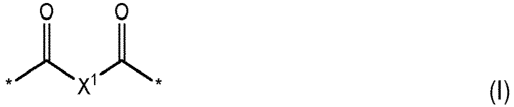
dans laquelle X¹ est -(CH₂)₁₆- qui est facultativement substitué une ou plusieurs fois par des substituants sélectionnés indépendamment de R¹ ; et
R¹ est un atome d'halogène, -OH, -NH₂, un alkyle en C₁₋₆, un hétéroalkyle en C₁₋₆, un alcényle en C₂₋₆, un hétéroalcényle en C₂₋₆, un cycloalkyle en C₃₋₁₀, ou un hétérocycloalkyle en C₂₋₁₀.

2. La composition de revêtement en poudre de la revendication 1, dans laquelle le polyol de polyester comprend en outre une ou plusieurs unités constitutives selon la formule (II) : 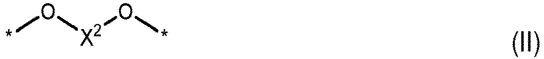 dans laquelle X² est un hydrocarbylène en C₂₋₁₈, où un ou plusieurs atomes de carbone saturés du groupe hydrocarbylène sont facultativement remplacés par de l'oxygène, de l'azote, du soufre, ou du silicium.

3. La composition de revêtement en poudre de la revendication 2, dans laquelle X² est -(CH₂)₄-, -(CH₂)₆-, ou -(CH₂)₈-.

4. La composition de revêtement en poudre de la revendication 2, dans laquelle X² est un -CH₂-(1,4-cyclohexylène)-CH₂-.

5. La composition de revêtement en poudre de n'importe laquelle des revendications 1 à 4, dans laquelle le polyol de polyester est formé à partir d'un premier mélange réactionnel, lequel comprend : un premier diol à chaîne courte ; et un diacide ou un ester de celui-ci.

6. La composition de revêtement en poudre de la revendication 5, dans laquelle le diacide est un acide 1,18-octadécanedioïque, ou un ester de celui-ci.

7. La composition de revêtement en poudre de n'importe laquelle des revendications 5 ou 6, dans laquelle le premier diol à chaîne courte est un diol hydrocarbylène en C₂₋₁₈, où un ou plusieurs atomes de carbone saturés du groupe hydrocarbylène sont facultativement remplacés par de l'oxygène, de l'azote, du soufre, ou du silicium.

8. La composition de revêtement en poudre de la revendication 7, dans laquelle le premier diol à chaîne courte est un éthylène glycol, un diéthylène glycol, un triéthylène glycol, un tétraéthylène glycol, un pentaéthylène glycol, un propylène glycol, un dipropylène glycol, un tripropylène glycol, un tétrapropylène glycol, un 1,3-propanediol, un 1,3-butanediol, un 1,4-butanediol, un néopentyl glycol, un 1,5-pentanediol, un 1,6-hexanediol, un 1,4-cyclohexane-diméthanol, un hydroquinone bis(2-hydroxyéthyl)éther, ou un p-di-(2-hydroxyéthoxy)benzène, ou n'importe quel mélange de ceux-ci.

9. La composition de revêtement en poudre de n'importe laquelle des revendications 1 à 8 dans laquelle le rapport poids à poids du diacide à une ou plusieurs impuretés monoacides dans le premier mélange réactionnel est d'au moins 100/1.

10. La composition de revêtement en poudre de n'importe laquelle des revendications 1 à 9, comprenant en outre un agent de réticulation.
